(19) Europäisches Patentamt
European Patent Office
Office européen des brevets

(11) **EP 1 725 320 B1**

(12) **EUROPÄISCHE PATENTSCHRIFT**

(45) Veröffentlichungstag und Bekanntmachung des Hinweises auf die Patenterteilung:
**11.12.2013 Patentblatt 2013/50**

(21) Anmeldenummer: **05707732.3**

(22) Anmeldetag: **09.03.2005**

(51) Int Cl.:
***B01D 53/14*** (2006.01)

(86) Internationale Anmeldenummer:
**PCT/EP2005/002498**

(87) Internationale Veröffentlichungsnummer:
**WO 2005/087349 (22.09.2005 Gazette 2005/38)**

(54) **VERFAHREN ZUM ENTFERNEN VON KOHLENDIOXID AUS GASSTRÖMEN MIT NIEDRIGEN KOHLENDIOXID-PARTIALDRÜCKEN**

METHOD FOR THE REMOVAL OF CARBON DIOXIDE FROM GAS FLOWS WITH LOW CARBON DIOXIDE PARTIAL PRESSURES

PROCEDE D'ELIMINATION DU DIOXYDE DE CARBONE DANS DES COURANTS GAZEUX A FAIBLES PRESSIONS PARTIELLES DE DIOXYDE DE CARBONE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **09.03.2004 DE 102004011429**

(43) Veröffentlichungstag der Anmeldung:
**29.11.2006 Patentblatt 2006/48**

(73) Patentinhaber: **BASF SE**
**67056 Ludwigshafen (DE)**

(72) Erfinder:
• **ASPRION, Norbert**
**68163 Mannheim (DE)**
• **CLAUSEN, Iven**
**68199 Mannheim (DE)**
• **LICHTFERS, Ute**
**76187 Karlsruhe (DE)**

(56) Entgegenhaltungen:
**EP-A- 0 368 422      WO-A-02/09849**
**JP-A- 8 257 353      US-A1- 2004 036 055**
**US-B1- 6 267 939**

• **PATENT ABSTRACTS OF JAPAN Bd. 1997, Nr. 02, 28. Februar 1997 (1997-02-28) & JP 08 252430 A (KANSAI ELECTRIC POWER CO INC:THE; MITSUBISHI HEAVY IND LTD), 1. Oktober 1996 (1996-10-01)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Entfernen von Kohlendioxid aus Gasströmen mit niedrigen Kohlendioxid-Partialdrücken, insbesondere zum Entfernen von Kohlendioxid aus Rauchgasen.

Die Entfernung von Kohlendioxid aus Rauchgasen ist aus verschiedenen Gründen wünschenswert, insbesondere aber zur Verminderung der Emission von Kohlendioxid, die als Hauptursache für den so genannten Treibhauseffekt angesehen wird.

Im industriellen Maßstab werden zur Entfernung von Sauergasen, wie Kohlendioxid, aus Fluidströmen häufig wässrige Lösungen organischer Basen, z. B. Alkanolamine, als Absorptionsmittel eingesetzt. Beim Lösen von Sauergasen bilden sich dabei aus der Base und den Sauergasbestandteilen ionische Produkte. Das Absorptionsmittel kann durch Erwärmen, Entspannen auf einen niedrigeren Druck oder Strippen regeneriert werden, wobei die ionischen Produkte zu Sauergasen zurück reagieren und/oder die Sauergase mittels Dampf abgestrippt werden. Nach dem Regenerationsprozess kann das Absorptionsmittel wiederverwendet werden.

Rauchgase weisen sehr geringe Kohlendioxid-Partialdrücke auf, da sie in der Regel bei einem Druck nahe dem Atmosphärendruck anfallen und typischerweise 3 bis 13 Vol.% Kohlendioxid enthalten. Um eine wirksame Entfernung von Kohlendioxid zu erreichen, muss das Absorptionsmittel eine hohe Sauergas-Affinität aufweisen, was in der Regel bedeutet, dass die Kohlendioxid-Absorption stark exotherm verläuft. Andererseits bedingt der hohe Betrag der Absorptionsreaktionsenthalpie einen erhöhten Energieaufwand bei der Regeneration des Absorptionsmittels.

Dan G. Chapel et al. empfehlen daher in ihrem Vortrag "Recovery of CO2 from Flue Gases: Commercial Trends" (vorgetragen beim Jahrestreffen der Canadian Society of Chemical Engineers, 4.-6. Oktober, 1999, Saskatoon, Saskatchewan, Kanada), zur Minimierung der erforderlichen Regenerationsenergie ein Absorptionsmittel mit relativ niedriger Reaktionsenthalpie auszuwählen.

Der Erfindung liegt die Aufgabe zu Grunde, ein Verfahren anzugeben, das eine weitgehende Entfernung von Kohlendioxid aus Gasströmen mit niedrigem KohlendioxidPartialdrücken gestattet und bei dem die Regeneration des Absorptionsmittels mit vergleichsweise geringem Energieaufwand möglich ist.

Die EP-A 558 019 beschreibt ein Verfahren zur Entfernung von Kohlendioxid aus Verbrennungsgasen, bei dem das Gas bei Atmosphärendruck mit einer wässrigen Lösung eines sterisch gehinderten Amins, wie 2-Amino-2-methyl-1-propanol, 2-(Methylamino)-ethanol, 2-(Ethylamino)-ethanol, 2-(Diethylamino)-ethanol und 2-(2-Hydroxyethyl)-piperidin, behandelt wird. Die EP-A 558 019 beschreibt außerdem ein Verfahren, bei dem das Gas bei Atmosphärendruck mit einer wässrigen Lösung eines Amins wie 2-Amino-2-methyl-1,3-propandiol, 2-Amino-2-methyl-1-propanol, 2-Amino-2-ethyl-1,3-propandiol, t-Butyldiethanolamin und 2-Amino-2-hydroxymethyl-1,3-propandiol, und eines Aktivators wie Piperazin, Piperidin, Morpholin, Glycin, 2-Methylaminoethanol, 2-Piperidinethanol und 2-Ethylaminoethanol, behandelt wird.

Die EP-A 879 631 offenbart ein Verfahren zur Entfernung von Kohlendioxid aus Verbrennungsgasen, bei dem das Gas bei Atmosphärendruck mit einer wässrigen Lösung eines eines sekundären und eines tertiären Amins behandelt wird.

Die EP-A 647 462 beschreibt ein Verfahren zur Entfernung von Kohlendioxid aus Ver brennungsgasen, bei dem das Gas bei Atmosphärendruck mit einer wässrigen Lösung eines tertiären Alkanolamins und eines Aktivators, wie Diethylentriamin, Triethylentetramin, Tetraethylenpentamin; 2,2-Dimethyl-1,3-diaminopropan, Hexamethylendiamin, 1,4-Diaminobutan, 3,3-Iminotrispropylamin, Tris(2-aminoethyl)amin, N-(2-Aminoethyl)piperazin, 2-(Aminoethyl)ethanol, 2-(Methylamino)ethanol, 2-(n-Butylamino)ethanot, behandelt wird.

Ein ähnliches Verfahren wird ebenso in US-A-2004/0036055 beschrieben.

Die Aufgabe wird gelöst durch ein Verfahren zum Entfernen von Kohlendioxid aus einem Gasstrom, in dem der Partialdruck des Kohlendioxids im Gasstrom weniger als 200 mbar, meist 20 bis 150 mbar, beträgt, wobei man den Gasstrom mit einem flüssigen Absorptionsmittel in Kontakt bringt, das eine wässrige Lösung

(A) einer Aminverbindung der allgemeinen Formel

$$R^aR^bN-X-NR^{a'}R^{b'}$$

worin $R^a$, $R^b$, $R^{a'}$ und $R^{b'}$ unabhängig voneinander unter $C_1$-$C_6$-Alkylgruppen. $C_2$-$C_6$-Hydroxyalkylgruppen oder $C_1$-$C_6$-Alkoxy-$C_2$-$C_6$-alkylgruppen ausgewählt sind und X für eine $C_2$-$C_6$-Alkylengruppe steht, und
(B) eines Aktivators, der unter primären und sekundären Aminen ausgewählt ist, umfasst.

In bevorzugten Ausführungsformen stehen $R^a$, $R^b$, $R^{a'}$ und $R^{b'}$ unabhängig voneinander für Methyl oder Ethyl.
X steht vorzugsweise für eine $C_2$-$C_3$-Alkylengruppe, $-X^1-NR-X^2-$ oder $-X^1-O-X^2-$, worin $X^1$ und $X^2$ unabhängig voneinander für $C_1$-$C_3$-Alkylgruppen stehen.
Besonders bevorzugte Aminverbindungen sind N,N,N',N'' Tetramethylethylendiamin, N,N-Diethyl-N',N'-dimethylethylendiamin, N,N,N',N'-Tetraethylethylendiamin, N,N,N',N'-Tetramethyl-1,3-propandiamin und N,N,N',N'-Tetraethyl-1,3-propandiamin.

Der Aktivator ist bevorzugt ausgewählt unter

a) 5- oder 6-gliedrigen gesättigten Heterocyclen mit wenigstens einer NH-Gruppe im Ring, die ein oder zwei weitere, unter Stickstoff und Sauerstoff ausgewählte Heteroatome im Ring enthalten können, oder

b) Verbindungen der Formel $R^1$-NH-$R^2$-$NH_2$, worin $R^1$ für $C_1$-$C_6$-Alkyl steht und $R^2$ für $C_2$-$C_6$-Alkylen steht.

Beispiele bevorzugter Aktivatoren sind Piperazin, 2-Methylpiperazin, N-Methyl-piperazin, Homopiperazin, Piperidin und Morpholin sowie 3-Methylaminopropylamin. Als Komponente (A) können auch Gemische verschiedener Aminverbindungen bzw. als Komponente (B) Gemische verschiedener Aktivatoren verwendet werden.

Vorzugsweise weist die Aminverbindung einen $pK_a$-Wert (gemessen bei 25 °C; 1 mol/l) von 9 bis 11, insbesondere 9,3 bis 10,5, auf. Bei mehrbasischen Aminen liegt wenigstens ein $pK_a$-Wert im angegebenen Bereich.

Die erfindungsgemäß eingesetzten Aminverbindungen sind gekennzeichnet durch einen Betrag der Reaktionsenthalpie $\Delta_R H$ der Protonierungsreaktion

$$A + H^+ \rightarrow AH^+$$

(worin A für das tertiäre aliphatische Amin steht), der größer ist als derjenige von Methyldiethanolamin (bei 25 °C, 1013 mbar). Die Reaktionsenthalpie $\Delta_R H$ der Protonierungsreaktion für Methyldiethanolamin beträgt etwa - 35 kJ/mol.

Die Reaktionsenthalpie $\Delta_R H$ lässt sich nach der folgenden Gleichung mit guter Näherung aus den pK-Werten bei unterschiedlichen Temperaturen abschätzen:

$$\Delta_R H \approx R^*(pK_1 - pK_2)/(1/T_1 - 1/T_2)^* \ln(10)$$

Eine Zusammenstellung der nach der obigen Gleichung berechneten $\Delta_R H$-Werte verschiedener tertiärer Amine findet sich in der nachstehenden Tabelle:

| Amin | $pK_1(T_1)$ | $pK_2 (T_2)$ | Reaktionsenthalpie -$\Delta_R H$ / kJ/mol |
|---|---|---|---|
| N-Methyldiethanolamin (MDEA) | 8,52 (298K) | 7,87 (333K) | 35 |
| N,N-Diethylethanolamin (DEEA) | 9,76 (293K) | 8,71 (333K) | 49 |
| N,N-Dimethylethanolamin (DMEA) | 9,23 (293K) | 8,36 (333K) | 41 |
| 2-Diisopropylaminoethanol (DIEA) | 10,14 (293K) | 9,13 (333K) | 47 |
| N,N,N',N'-Tetramethylpropandiamin (TMPDA) | 9,8 (298K) | 9,1 (333K) | 38 |
| N,N,N',N'-Tetraethylpropandiamin (TEPDA) | 10,5 (298K) | 9,7 (333K) | 43 |
| 1-Dimethylamino-2-dimethylaminoethoxyethan (Niax) | 8,9 (298K) | 8,2 (333K) | 38 |
| N,N-Dimethyl-N',N'-diethylethylendiamin (DMDEEDA) | 9,6 (298K) | 8,9 (333K) | 38 |

Überraschenderweise eignen sich für das erfindungsgemäße Verfahren Amine mit einem relativ hohen Betrag der Reaktionsenthalpie $\Delta_R H$. Dies ist vermutlich darauf zurückzuführen, dass die Temperaturabhängigkeit der Gleichgewichtskonstanten der Protonierungsreaktion proportional zur Reaktionsenthalpie $\Delta_R H$ ist. Bei Aminen mit hoher Reaktionsenthalpie $\Delta_R H$ ist die Temperaturabhängigkeit der Lage des Protonierungsgleichgewichts stärker ausgeprägt. Da die Regeneration des Absorptionsmittels bei höherer Temperatur erfolgt als der Absorptionsschritt, gelingt die Bereitstellung von Absorptionsmitteln, die im Absorptionsschritt eine wirksame Entfernung von Kohlendioxid selbst bei geringen Kohlendioxid-Partialdrücken erlauben, aber mit relativ geringem Energieeinsatz regeneriert werden können.

Üblicherweise beträgt die Konzentration der Aminverbindung 20 bis 60 Gew.-%, vorzugsweise 25 bis 50 Gew.%, und die Konzentration des Aktivators 1 bis 10 Gew.-%, vorzugsweise 2 bis 8 Gew.%, bezogen auf das Gesamtgewicht des Absorptionsmittels.

Die Amine werden in Form ihrer wässrigen Lösungen eingesetzt. Die Lösungen können zusätzlich physikalische Lösungsmittel enthalten, die z. B. ausgewählt sind unter Cyclotetramethylensulfon (Sulfolan) und dessen Derivaten, aliphatischen Säureamiden (Acetylmorpholin, N-Formylmorpholin), N-alkylierten Pyrrolidonen und entsprechenden Piperidonen, wie N-Methylpyrrolidon (NMP), Propylencarbonat, Methanol, Dialkylethern von Polyethylenglykolen und Gemischen davon.

Das erfindungsgemäße Absorptionsmittel kann weitere funktionelle Bestandteile enthalten, wie Stabilisatoren, insbesondere Antioxidantien, vgl. z. B. die DE 102004011427.

Sofern vorhanden, werden beim erfindungsgemäßen Verfahren neben Kohlendioxid üblicherweise auch andere Sauergase, wie z. B. $H_2S$, $SO_2$, $CS_2$, HCN, COS, $NO_2$, HCl, Disulfide oder Mercaptane, aus dem Gasstrom entfernt.

Bei dem Gasstrom handelt es sich im Allgemeinen um einen Gasstrom, der auf folgende Weise gebildet wird:

a) Oxidation organischer Substanzen z. B. Rauchgase (flue gas),
b) Kompostierung und Lagerung organische Substanzen enthaltender Abfallstoffe, oder
c) bakterielle Zersetzung organischer Substanzen.

Die Oxidation kann unter Flammenerscheinung, d. h. als herkömmliche Verbrennung, oder als Oxidation ohne Flammenerscheinung, z. B. in Form einer katalytischen Oxidation oder Partialoxidation, durchgeführt werden. Organische Substanzen, die der Verbrennung unterworfen werden, sind üblicherweise fossile Brennstoffe wie Kohle, Erdgas, Erdöl, Benzin, Diesel, Raffinate oder Kerosin, Biodiesel oder Abfallstoffe mit einem Gehalt an organischen Substanzen. Ausgangsstoffe der katalytischen (Partial-) Oxidation sind z. B. Methanol oder Methan, das zu Ameisensäure oder Formaldehyd umgesetzt werden kann.

Abfallstoffe, die der Oxidation, der Kompostierung oder Lagerung unterzogen werden, sind typischerweise Hausmüll, Kunststoffabfälle oder Verpackungsmüll.

Die Verbrennung der organische Substanzen erfolgt meistens in üblichen Verbrennungsanlagen mit Luft. Die Kompostierung und Lagerung organischer Substanzen enthaltender Abfallstoffe erfolgt im Allgemeinen auf Mülldeponien. Das Abgas bzw. die Abluft derartiger Anlagen kann vorteilhaft nach dem erfindungsgemäßen Verfahren behandelt werden.

Als organische Substanzen für bakterielle Zersetzung werden üblicherweise Stalldung, Stroh, Jauche, Klärschlamm, Fermentationsrückstände und dergleichen verwendet. Die bakterielle Zersetzung erfolgt z.B. in üblichen Biogasanlagen. Die Abluft derartiger Anlagen kann vorteilhaft nach dem erfindungsgemäßen Verfahren behandelt werden.

Das Verfahren eignet sich auch zur Behandlung der Abgase von Brennstoffzellen oder chemischer Syntheseanlagen, die sich einer (Partial-) Oxidation organischer Substanzen bedienen.

Daneben kann das erfindungsgemäße Verfahren natürlich auch angewendet werden, um unverbrannte fossile Gase, wie Erdgas, z. B. so genannte Coal-seam-Gase, d. h. bei der Förderung von Kohle anfallende Gase; die gesammelt und komprimiert werden, zu behandeln.

Im Allgemeinen enthalten diese Gasströme bei Normalbedingungen weniger als 50 mg/m$^3$ Schwefeldioxid.

Die Ausgangsgase können entweder den Druck aufweisen, der etwa dem Druck der Umgebungsluft entspricht, also z. B. Normaldruck oder einen Druck der vom Normaldruck um bis zu 1 bar abweicht.

Zur Durchführung des erfindungsgemäßen Verfahrens geeignete Vorrichtungen umfassen wenigstens eine Waschkolonne, z. B. Füllkörper, Packungs- und Bodenkolonnen, und/oder andere Absorber wie Membrankontaktoren, Radialstromwäscher, Strahlwäscher, Venturi-Wäscher und Rotations-Sprühwäscher. Die Behandlung des Gasstroms mit dem Absorptionsmittel erfolgt dabei bevorzugt in einer Waschkolonne im Gegenstrom. Der Gasstrom wird dabei im Allgemeinen in den unteren Bereich und das Absorptionsmittel in den oberen Bereich der Kolonne eingespeist.

Geeignet zur Durchführung des erfindungsgemäßen Verfahrens sind auch Waschkolonnen aus Kunststoff, wie Polyolefinen oder Polytetrafluorethylen, oder Waschkolonnen, deren innere Oberfläche ganz oder teilweise mit Kunststoff oder Gummi ausgekleidet ist. Weiterhin eignen sich Membrankontaktoren mit Kunststoffgehäuse.

Die Temperatur des Absorptionsmittels beträgt im Absorptionsschritt im Allgemeinen etwa 30 bis 70°C, bei Verwendung einer Kolonne beispielsweise 30 bis 60°C am Kopf der Kolonne und 40 bis 70°C am Boden der Kolonne. Es wird ein an sauren Gasbestanteilen armes, d. h. ein an diesen Bestandteilen abgereichertes Produktgas (Beigas) und ein mit sauren Gasbestandteilen beladenes Absorptionsmittel erhalten.

Im Allgemeinen regeneriert man das beladene Absorptionsmittel durch

a) Erwärmung, z. B. auf 70 bis 110 °C,
b) Entspannung,
c) Strippen mit einem inerten Fluid

oder eine Kombination zweier oder aller dieser Maßnahmen.

In der Regel wird das beladene Absorptionsmittel zur Regeneration erwärmt und das freigesetzte Kohlendioxid wird z. B. in einer Desorptionskolonne abgetrennt. Bevor das regenerierte Absorptionsmittel wieder in den Absorber eingeführt wird, wird es auf eine geeignete Absorptionstemperatur abgekühlt. Um die im heißen regenerierten Absorptionsmittel enthaltene Energie auszunutzen, ist es bevorzugt, das beladene Absorptionsmittel aus dem Absorber durch Wärmetausch mit dem heißen regenerierten Absorptionsmittel vorzuerwärmen. Durch den Wärmetausch wird das beladene Absorptionsmittel auf eine höhere Temperatur gebracht, so dass im Regenerationsschritt ein geringerer Energieeinsatz erforderlich ist. Durch den Wärmetausch kann auch bereits eine teilweise Regenerierung des beladenen Absorptionsmittels unter Freisetzung von Kohlendioxid erfolgen. Der erhaltene gas-flüssig-gemischtphasige Strom wird in ein Phasentrenngefäß geleitet, aus dem das Kohlendioxid abgezogen wird; die Flüssigphase wird zur vollständigen Regeneration des Absorptionsmittels in die Desorptionskolonne geleitet.

Vielfach wird das in der Desorptionskolonne freigesetzte Kohlendioxid anschließend verdichtet und z. B. einem Drucktank oder einer Sequestrierung zugeführt. In diesen Fällen kann es vorteilhaft sein, die Regeneration des Absorptionsmittels bei einem höheren Druck, z. B. 2 bis 10 bar, vorzugsweise 2,5 bis 5 bar durchzuführen. Das beladene Absorptionsmittel wird hierzu mittels einer Pumpe auf den Regenerationsdruck verdichtet und in die Desorptionskolonne eingebracht. Das Kohlendioxid fällt auf diese Weise auf einem höheren Druckniveau an. Die Druckdifferenz zum Druckniveau des Drucktanks ist geringer und man kann unter Umständen eine Kompressionsstufe einsparen. Ein höherer Druck bei der Regeneration bedingt eine höhere Regenerationstemperatur. Bei höherer Regenerationstemperatur kann eine geringere Restbeladung des Absorptionsmittel erreicht werden. Die Regenerationstemperatur ist in der Regel nur durch die thermische Stabilität des Absorptionsmittels begrenzt.

Vor der erfindungsgemäßen Absorptionsmittel-Behandlung wird das Rauchgas vorzugsweise einer Wäsche mit einer wässrigen Flüssigkeit, insbesondere mit Wasser, unterzogen, um das Rauchgas abzukühlen und zu befeuchten (quenchen). Bei der Wäsche können auch Stäube oder gasförmige Verunreinigungen wie Schwefeldioxid entfernt werden.

Die Erfindung wird anhand der beigefügten Figur näher erläutert.

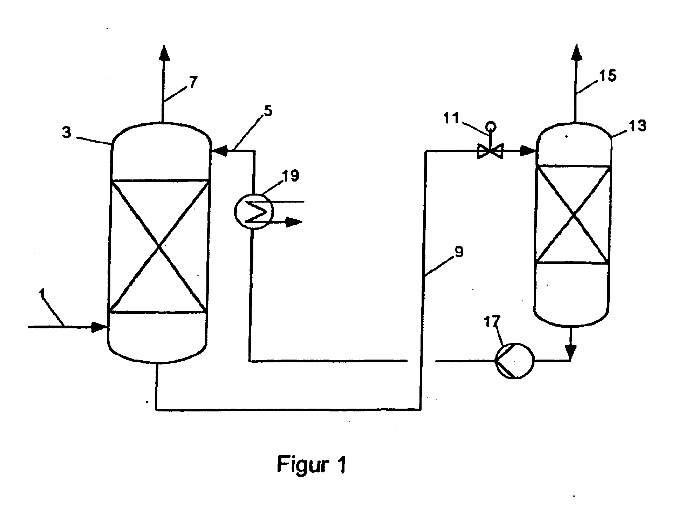

Fig. 1 ist eine schematische Darstellung einer zur Durchführung des erfindungsgemäßen Verfahrens geeigneten Anlage.

Gemäß Fig. 1 wird über eine Zuleitung 1 ein geeignet vorbehandeltes, Kohlendioxid enthaltendes Verbrennungsgas in einem Absorber 3 mit dem regenerierten Absorptionsmittel, das über die Absorptionsmittelleitung 5 zugeführt wird, im Gegenstrom in Kontakt gebracht. Das Absorptionsmittel entfernt Kohlendioxid durch Absorption aus dem Verbrennungsgas; dabei wird über eine Abgasleitung 7 ein an Kohlendioxid armes Reingas gewonnen. Der Absorber 3 kann oberhalb des Absorptionsmitteleintritts Rückwaschböden oder Rückwaschsektionen, die vorzugsweise mit Packungen ausgerüstet sind, aufweisen (nicht dargestellt), wo mit Hilfe von Wasser oder Kondensat mitgeführtes Absorptionsmittel aus dem $CO_2$-abgereicherten Gas abgetrennt wird. Die Flüssigkeit auf dem Rückwaschboden wird geeigneterweise über einen externen Kühler recycliert.

Über eine Absorptionsmittelleitung 9 und ein Drosselventil 11 wird das mit Kohlendioxid beladene Absorptionsmittel einer Desorptionskolonne 13 zugeleitet. Im unteren Teil der Desorptionskolonne 13 wird das beladene Absorptionsmittel mittels eines (nicht dargestellten) Aufheizers erwärmt und regeneriert. Das dabei freigesetzte Kohlendioxid verlässt die Desorptionskolonne 13 über die Abgasleitung 15. Die Desorptionskolonne 13 kann oberhalb des Absorptionsmitteleintritts Rückwaschböden oder Rückwaschsektionen, die vorzugsweise mit Packungen ausgerüstet sind, aufweisen (nicht dargestellt), wo mit Hilfe von Wasser oder Kondensat mitgeführtes Absorptionsmittel aus dem freigesetzten $CO_2$ abgetrennt wird. In der Leitung 15 kann ein Wärmetauscher mit Kopfverteiler oder Kondensator vorgesehen sein. Das regenerierte Absorptionsmittel wird anschließend mittels einer Pumpe 17 über einen Wärmetauscher 19 der Absorptionskolonne 3 wieder zugeführt. Um die Akkumulierung von absorbierten Substanzen, die bei der Regenerierung nicht oder unvollständig ausgetrieben werden, oder von Zersetzungsprodukten im Absorptionsmittel zu vermeiden, kann man einen Teilstrom des aus der Desorptionskolonne 13 abgezogenen Absorptionsmittels einem Verdampfer zuführen, in dem schwerflüchtige Neben- und Zersetzungsprodukte als Rückstand anfallen und das reine Absorptionsmittel als Brüden abgezogen wird. Die kondensierten Brüden werden wieder dem Absorptionsmittelkreislauf zugeführt. Zweckmäßigerweise kann man dem Teilstrom eine Base, wie Kaliumhydroxid, zusetzen, welches z. B. mit Sulfatoder Chloridionen schwerflüchtige Salze bildet, die zusammen mit dem Verdampferrückstand dem System entzogen werden.

Beispiele

In den nachstehenden Beispielen werden folgende Abkürzungen verwendet:

DMEA: N,N-Dimethylethanolamin
DEEA: N,N-Diethylethanolamin
TMPDA N,N,N',N'-Tetramethylpropandiamin
MDEA: N-Methyldiethanolamin
MAPA: 3-Methylaminopropylamin
Niax: 1-Dimethylamino-2-dimethylaminoethoxyethan

Alle Angaben in % sind gewichtsbezogen.

Beispiel 1: $CO_2$-Stoffübergangsgeschwindigkeit

Die Stoffübergangsgeschwindigkeit wurde in einer Laminarstrahlkammer mit wasserdampfgesättigtem $CO_2$ bei 1 bar und 50°C bzw. 70°C, Strahlkammerdurchmesser 0,94 mm, Strahllänge 1 bis 8 cm, Volumenstrom des Absorptionsmittels 1,8 ml/s bestimmt und wird als Gasvolumen in Normalkubikmeter pro Oberfläche des Absorptionsmittels, Druck und Zeit angegeben ($Nm^3/m^2/bar/h$).

Die Ergebnisse sind in der nachstehenden Tabelle 1 zusammengefasst. Die in der Tabelle angegebene $CO_2$-Stoffübergangsgeschwindigkeit ist auf die $CO_2$-Stoffübergangsgeschwindigkeit eines Vergleichsabsorptionsmittels bezogen, das 35 Gew.-% MDEA und 5 Gew.-% Piperazin enthält.

Tabelle 1:

| Amin [35 Gew.-%] | Aktivator [5 Gew.-%] | Temperatur [°C] | rel. $CO_2$-Stoffübergangsgeschwindigkeit [%] |
|---|---|---|---|
| DEEA** | Piperazin | 50 | 121,60 |
| DEEA** | Piperazin | 70 | 117,24 |
| TMPDA | Piperazin | 50 | 157,60 |
| TMPDA | Piperazin | 70 | 145,98 |
| ** Referenzbeispiel | | | |

Beispiel 2: $CO_2$-Aufnahmekapazität und Regenerations-Energiebedarf

Um die Kapazität verschiedener Absorptionsmittel für die Aufnahme von $CO_2$ zu ermitteln und den Energieverbrauch bei der Regeneration der Absorptionsmittel abzuschätzen, wurden zunächst Messwerte für die $CO_2$-Beladung bei 40 und 120 °C unter Gleichgewichtsbedingungen bestimmt. Diese Messungen wurden für die Systeme $CO_2$/Niax/MAP/Wasser, $CO_2$/TMPDA/MAPA/Wasser; $CO_2$/DEEA/MAPA/Wasser, $CO_2$/DMEA/MAPA/Wasser; $CO_2$/NiaxlPiperazin/Wasser, $CO_2$/TMPDA/Piperazin/Wasser in einem Glas-Druckgefäß (Volumen = 110$cm^3$ bzw. 230 $cm^3$) durchgeführt, in dem man eine definierte Menge des Absorptionsmittels vorlegte, evakuierte und bei konstanter Temperatur Kohlendioxid stufenweise über ein definiertes Gasvolumen zudosierte. Die in der Flüssigphase gelöste Menge Kohlendioxid wurde nach Gasraumkorrektur der Gasphase berechnet. Die Gleichgewichtsmessungen für das System $CO_2$/MDEA/MAPA/Wasser wurden im Druckbereich > 1 bar mit einer Hochdruck-Gleichgewichtszelle ausgeführt, im Druckbereich < 1 bar wurden die Messungen mit Hilfe von Headspace-Chromatographie durchgeführt. Die Gleichgewichtsdaten für das System $CO_2$/MDEA/Piperazin/Wasser wurden nach dem Elektrolyt-Ansatz nach Pitzer (Kenneth S. Pitzer, Activity Coefficients in Electrolyte Solutions 2nd ed., CRC-Press, 1991, Chapt. 3, Ion Interaction Approach: Theory and Data Correlation; die Parameter wurden an Messdaten angepasst) berechnet.

Für die Abschätzung der Absorptionsmittel-Kapazität wurden folgende Annahmen gemacht:

1. Der Absorber wird bei einem Gesamtdruck von einem bar mit einem $CO_2$-haltigen Rauchgas von 0,13 bar $CO_2$-Partialdruck (=13% $CO_2$-Gehalt) beaufschlagt.

2. Im Absorbersumpf herrscht eine Temperatur von 40°C.

3.Bei der Regeneration herrscht im Desorbersumpf eine Temperatur von 120°C.

4. Im Absorbersumpf wird ein Gleichgewichtszustand erreicht, d.h. der Gleichgewichtspartialdruck ist gleich dem Feedgas-Partialdruck von 13 kPa.

5. Bei der Desorption herrscht ein $CO_2$-Partialdruck von 5 kPa im Desorbersumpf (Die Desorption wird typischerweise bei 200 kPa betrieben. Bei 120°C besitzt reines Wasser einen Partialdruck von etwa 198 kPa. In einer Aminlösung ist der Partialdruck von Wasser etwas geringer, deshalb wird ein $CO_2$-Partialdruck von 5 kPa angenommen).

6. Bei der Desorption wird ein Gleichgewichtszustand erreicht.

Die Kapazität des Absorptionsmittels wurde (i) aus der Beladung (mol $CO_2$ pro kg Lösung) am Schnittpunkt der 40°-Gleichgewichtskurve mit der Linie des konstanten Feedgas-$CO_2$-Partialdrucks von 13 kPa (beladene Lösung am Absorbersumpf im Gleichgewicht); und (ii) aus dem Schnittpunkt der 120°-Gleichgewichtskurve mit der Linie des konstanten $CO_2$-Partialdrucks von 5 kPa (regenerierte Lösung am Desorbersumpf im Gleichgewicht) ermittelt. Die Differenz beider Beladungen ist die Kreislaufkapazität des jeweiligen Lösungsmittels. Eine große Kapazität bedeutet, dass weniger Lösungsmittel im Kreis gefahren werden muss und damit die Apparate wie z.B. Pumpen, Wärmetauscher aber auch die Rohrleitungen kleiner dimensioniert werden können. Weiterhin beeinflusst die Umlaufmenge auch die zum Regenerieren notwendige Energie.

Ein weiteres Maß für die Anwendungseigenschaften eines Absorptionsmittels ist die Steigung der Arbeitsgeraden im McCabe-Thiele-Diagramm (bzw. p-X-Diagramm) des Desorbers. Für die Verhältnisse im Sumpf des Desorbers liegt die Arbeitsgerade in der Regel sehr nahe bei der Gleichgewichtslinie, so dass die Steigung der Gleichgewichtskurve näherungsweise der Steigung der Arbeitsgerade gleichgesetzt werden kann. Bei konstanter Flüssigkeitsbelastung ist zur Regeneration eines Absorptionsmittels mit einer großen Steigung der Gleichgewichtskurve eine geringere Strippdampfmenge erforderlich. Der Energiebedarf zur Erzeugung des Strippdampfes trägt wesentlich zum Gesamtenergiebedarf des $CO_2$-Absorptionsprozesses bei.

Zweckmäßigerweise gibt man den Reziprokwert der Steigung an, da dieser direkt proportional zur benötigten Dampfmenge pro Kilogramm Absorptionsmittel ist. Dividiert man den Reziprokwert durch die Kapazität des Absorptionsmittel, so erhält man einen Vergleichswert, der direkt eine relative Aussage über die benötigte Dampfmenge pro absorbierter $CO_2$-Menge ermöglicht.

In der Tabelle 2 sind die Werte der Absorptionsmittel-Kapazität und des Dampfmengenbedarfs auf das Gemisch von MDEA/Piperazin normiert. In der Tabelle 3 sind die Werte der Absorptionsmittel-Kapazität und des Dampfmengenbedarfs auf das Gemisch von MDEA/MAPA normiert.

Man erkennt, dass Absorptionsmittel mit einem tertiären Amin, dessen Reaktionsenthalpie $\triangle_R H$ der Protonierungsreaktion größer ist als diejenige von Methyldiethanolamin, eine höhere Kapazität aufweisen und zur Regeneration eine niedrigere Dampfmenge erfordern.

Tabelle 2

| Absorptionsmittel | Relative Kapazität [%] | Relativer Dampfmengenbedarf [%] |
|---|---|---|
| Niax (37%)/Piperazin (3%)** | 162 | 52 |
| TMPDA (37%)/ Piperazin (3%) | 186 | 57 |
| MDEA (37%)/MAPA (3%)* | 100 | 100 |

Tabelle 3

| Absorptionsmittel | Relative Kapazität [%] | Relativer Dampfmengenbedarf [%] |
|---|---|---|
| Niax (37%)/MAPA (3%)** | 162 | 43 |
| MDEA (37%)/MAPA (3%)* | 100 | 100 |
| TMPDA (37%)/MAPA (3%) | 180 | 69 |
| DMEA (37%)/MAPA (3%) | 174 | 70 |
| DEEA (37%)/MAPA (3%) | 180 | 72 |
| *Vergleichsbeispiel ** Referenzbeispiel | | |

## Patentansprüche

1. Verfahren zum Entfernen von Kohlendioxid aus einem Gasstrom, in dem der Partialdruck des Kohlendioxids im Gasstrom weniger als 200 mbar beträgt, wobei man den Gasstrom mit einem flüssigen Absorptionsmittel in Kontakt bringt, das eine wässrige Lösung

    (A) einer Aminverbindung der allgemeinen Formel

    $R^a R^b N-X-NR^{a'} R^{b'}$

worin $R^a$, $R^b$, $R^{a'}$ und $R^{b'}$ unabhängig voneinander unter $C_1$-$C_6$-Alkylgruppen, $C_2$-$C_8$-Hydroxyalkylgruppen oder $C_1$-$C_6$-Alkoxy-$C_2$-$C_6$-alkylgruppen ausgewählt sind und X für eine $C_2$-$C_6$-Alkylengruppe steht, und (B) eines Aktivators, der unter primären und sekundären Aminen ausgewählt ist, umfasst.

2. Verfahren nach Anspruch 1, wobei die Aminverbindung unter N,N,N',N'-Tetramethylethylendiamin, N,N-Diethyl-N'N'-dimethylethylendiamin, N,N,N',N'-Tetraethylethylendiamin, N,N,N',N'-Tetramethyl-1,3-propandiamin und N,N,N',N'-Tetraethyl-1,3-propandiamin ausgewählt ist.

3. Verfahren nach Anspruch 1 oder 2, wobei der Aktivator ausgewählt ist unter

a) 5- oder 6-gliedrigen gesättigten Heterocyclen mit wenigstens einer NH-Gruppe im Ring oder
b) Verbindungen der Formel $R^1$-NH-$R^2$-$NH_2$, worin $R^1$ für $C_1$-$C_6$-Alkyl steht und $R^2$ für $C_2$-$C_6$-Alkylen steht

4. Verfahren nach Anspruch 3, wobei der Aktivator unter Piperazin, 2-Methylpiperazin, N-Methylpiperazin, Homopiperazin, Piperidin und Morpholin ausgewählt ist.

5. Verfahren nach Anspruch 3, wobei es sich bei dem Aktivator um 3-Methylaminopropylamin handelt.

6. Verfahren nach einem der vorhergehenden Ansprüche, wobei die Konzentration der Aminverbindung 20 bis 60 Gew.-% und die Konzentration des Aktivator 1 bis 10 Gew.-%, bezogen auf das Gesamtgewicht des Absorptionsmittels, beträgt.

7. Verfahren nach einem der vorhergehenden Ansprüche, wobei der Gasstrom

a) der Oxidation organischer Substanzen,
b) der Kompostierung oder Lagerung organischer Substanzen enthaltender Abfallstoffe, oder
c) der bakteriellen Zersetzung organischer Substanzen

entstammt.

8. Verfahren nach einem der vorhergehenden Ansprüche, wobei man das beladene Absorptionsmittel durch

a) Erwärmung,
b) Entspannung,
c) Strippen mit einem inerten Fluid

oder eine Kombination zweier oder aller dieser Maßnahmen regeneriert.

9. Verfahren nach Anspruch 8, wobei man das beladene Absorptionsmittel durch Erwärmen bei einem Druck von 2 bis 10 bar regeneriert.

10. Absorptionsmittel zum Entfernen von Kohlendioxid aus einem Gasstrom, umfassend eine wässrige Lösung

(A) einer Aminverbindung der Formel

$$R^a R^b N\text{-}X\text{-}N^{a'} R^{b'}$$

worin $R^a$, $R^b$, $R^{a'}$ und $R^{b'}$ unabhängig voneinander unter $C_1$-$C_6$-Alkylgruppen, $C_2$-$C_6$Hydroxyalkylgruppen oder $C_1$-$C_6$-Alkoxy-$C_2$-$C_6$-alkylgruppen ausgewählt sind und X für eine $C_2$-$C_6$-Alkylengruppe steht, und (B) eines Aktivators, der unter primären und sekundären Aminen ausgewählt ist.

11. Absorptionsmittel nach Anspruch 10, wobei das tertiäre aliphatische Amin unter N,N,N',N'-Tetramethylethylendiamin, N,N-Diethyl-N',N'-dimethylethylendiamin, N,N,N',N'-Tetraethylethylendiamin, N,N,N',N'-Tetramethyl-1,3-propandiamin und N,N,N',N'-Tetraethyl-1,3-propandiamin ausgewählt ist.

**Claims**

1. A process for removing carbon dioxide from a gas stream in which the partial pressure of the carbon dioxide in the gas stream is less than 200 mbar, which comprises bringing the gas stream into contact with a liquid absorption medium which comprises an aqueous solution of

   (A) an amine compound of the general formula

   $$R^aR^bN-X-NR^{a'}R^{b'}$$

   where $R^a$, $R^b$, $R^{a'}$ and $R^{b'}$ independently of one another are selected from $C_1$-$C_6$-alkyl groups, $C_2$-$C_6$-hydroxyalkyl groups or $C_1$-$C_6$-alkoxy-$C_2$-$C_6$-alkyl groups and X is a $C_2$-$C_6$-alkylene group, and
   (B) an activator which is selected from primary and secondary amines.

2. The process according to claim 1, wherein the amine compound is selected from N,N,N',N'-tetramethylethylenediamine, N,N-diethyl-N',N'-dimethylethylenediamine, N,N,N',N'-tetraethylethylenediamine, N,N,N',N'-tetramethyl-1,3-propanediamine and N,N,N',N'-tetraethyl-1,3-propanediamine.

3. The process according to claim 1 or 2, wherein the activator is selected from

   a) 5- or 6-membered saturated heterocycles containing at least one NH group in the ring or
   b) compounds of the formula $R^1$-NH-$R^2$-$NH_2$, where $R^1$ is $C_1$-$C_6$-alkyl and $R^2$ is $C_2$-$C_6$-alkylene.

4. The process according to claim 3, wherein the activator is selected from piperazine, 2-methylpiperazine, N-methylpiperazine, homopiperazine, piperidine and morpholine.

5. The process according to claim 3, wherein the activator is 3-methylaminopropylamine.

6. The process according to one of the preceding claims, wherein the concentration of the amine compound is from 20 to 60% by weight and the concentration of the activator is from 1 to 10% by weight, based on the total weight of the absorption medium.

7. The process according to one of the preceding claims, wherein the gas stream results from

   a) the oxidation of organic substances,
   b) the composting or storage of waste material containing organic substances, or
   c) the bacterial decomposition of organic substances.

8. The process according to one of the preceding claims, wherein the loaded absorption medium is regenerated by

   a) heating,
   b) expansion,
   c) stripping with an inert fluid

   or a combination of two or all of these measures.

9. The process according to claim 8, wherein the loaded absorption medium is regenerated by heating at a pressure of from 2 to 10 bar.

10. An absorption medium for removing carbon dioxide from a gas stream comprising an aqueous solution of

    (A) an amine compound of the formula

    $$R^aR^bN-X-NR^{a'}R^{b'},$$

    where $R^a$, $R^b$, $R^{a'}$ and $R^{b'}$ independently of one another are selected from $C_1$-$C_6$-alkyl groups, $C_2$-$C_6$-hydroxyalkyl groups or $C_1$-$C_6$-alkoxy-$C_2$-$C_6$-alkyl groups and X is a $C_2$-$C_6$-alkylene group, and
    (B) an activator which is selected from primary and secondary amines.

**11.** The absorption medium according to claim 10, wherein the tertiary aliphatic amine is selected from N,N,N',N'-tetramethylethylenediamine, N,N-diethyl-N',N'-dimethylethylenediamine, N,N,N',N'-tetraethylethylenediamine, N,N,N',N'-tetramethyl-1,3-propanediamine and N,N,N',N'-tetraethyl-1,3-propanediamine.

**Revendications**

**1.** Procédé d'élimination de dioxyde de carbone d'un courant gazeux, la pression partielle du dioxyde de carbone dans le courant gazeux étant inférieure à 200 mbar, dans lequel le courant gazeux est mis en contact avec un agent d'absorption liquide qui comprend une solution aqueuse :

(A) d'un composé aminé de formule générale

$$R^aR^bN-X-NR^{a'}R^{b'}$$

dans laquelle $R^a$, $R^b$ $R^{a'}$ et $R^{b'}$ sont choisis indépendamment les uns des autres parmi les groupes alkyle en $C_1$-$C_6$, les groupes hydroxyalkyle en $C_2$-$C_6$ ou les groupes alcoxy en $C_1$-$C_6$-alkyle en $C_2$-$C_6$, et X représente un groupe alkylène en $C_2$-$C_6$, et
(B) d'un activateur, qui est choisi parmi les amines primaires et secondaires.

**2.** Procédé selon la revendication 1, dans lequel le composé aminé est choisi parmi la N,N,N',N'-tétraméthyléthylènediamine, la N,N-diéthyl-N',N'-diméthyléthylènediamine, la N,N,N',N'-tétraéthyléthylènediamine, la N,N,N',N'-tétraméthyl-1,3-propanediamine et la N,N,N',N'-tétraéthyl-1,3-propanediamine.

**3.** Procédé selon la revendication 1 ou 2, dans lequel l'activateur est choisi parmi

a) les hétérocycles saturés à 5 ou 6 éléments contenant au moins un groupe NH dans le cycle ou
b) les composés de formule $R^1$-NH-$R^2$-$NH_2$, $R^1$ représentant alkyle en $C_1$-$C_6$ et $R^2$ représentant alkylène en $C_2$-$C_6$.

**4.** Procédé selon la revendication 3, dans lequel l'activateur est choisi parmi la pipérazine, la 2-méthylpipérazine, la N-méthylpipérazine, l'homopipérazine, la pipéridine et la morpholine.

**5.** Procédé selon la revendication 3, dans lequel l'activateur est la 3-méthylaminopropylamine.

**6.** Procédé selon l'une quelconque des revendications précédentes, dans lequel la concentration du composé aminé est de 20 à 60 % en poids et la concentration de l'activateur est de 1 à 10 % en poids, par rapport au poids total de l'agent d'absorption.

**7.** Procédé selon l'une quelconque des revendications précédentes, dans lequel le courant gazeux provient

a) de l'oxydation de substances organiques,
b) du compostage ou du stockage de déchets contenant des substances organiques, ou
c) de la décomposition bactérienne de substances organiques.

**8.** Procédé selon l'une quelconque des revendications précédentes, dans lequel l'agent d'absorption chargé est régénéré par

a) chauffage,
b) détente,
c) extraction avec un fluide inerte

ou une combinaison de deux ou de l'ensemble de ces mesures.

**9.** Procédé selon la revendication 8, dans lequel l'agent d'absorption chargé est régénéré par chauffage à une pression de 2 à 10 bar.

**10.** Agent d'absorption pour l'élimination de dioxyde de carbone d'un courant gazeux, comprenant une solution aqueuse

(A) d'un composé aminé de formule générale

$$R^a R^b N\text{-}X\text{-}NR^{a'}R^{b'}$$

dans laquelle $R^a$, $R^b$, $R^{a'}$ et $R^{b'}$ sont choisis indépendamment les uns des autres parmi les groupes alkyle en $C_1$-$C_6$, les groupes hydroxyalkyle en $C_2$-$C_6$ ou les groupes alcoxy en $C_1$-$C_6$-alkyle en $C_2$-$C_6$, et X représente un groupe alkylène en $C_2$-$C_6$, et

(B) d'un activateur, qui est choisi parmi les amines primaires et secondaires.

11. Agent d'absorption selon la revendication 10, dans lequel l'amine aliphatique tertiaire est choisie parmi la N,N,N', N'-tétraméthyléthylènediamine, la N,N-diéthyl-N',N'-diméthyléthylènediamine, la N,N,N',N'-tétraéthyléthylènediamine, la N,N,N',N'-tétraméthyl-1,3-propanediamine et la N,N,N',N'-tétraéthyl-1,3-propanediamine.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 558019 A
- EP 879631 A
- EP 647462 A
- US 20040036055 A
- DE 102004011427

**In der Beschreibung aufgeführte Nicht-Patentliteratur**

- Recovery of CO2 from Flue Gases: Commercial Trends. *vorgetragen beim Jahrestreffen der Canadian Society of Chemical Engineers,* 04. Oktober 1999